Europäisches Patentamt

European Patent Office

Office européen des brevets

(19)

(11) **EP 1 258 500 A1**

## (12) DEMANDE DE BREVET EUROPEEN

(43) Date de publication:
**20.11.2002 Bulletin 2002/47**

(51) Int Cl.⁷: **C08F 36/18**, C08F 2/26

(21) Numéro de dépôt: **01202703.3**

(22) Date de dépôt: **16.07.2001**

(84) Etats contractants désignés:
**AT BE CH CY DE DK ES FI FR GB GR IE IT LI LU
MC NL PT SE TR**
Etats d'extension désignés:
**AL LT LV MK RO SI**

(30) Priorité: **14.05.2001  FR 0106325**

(71) Demandeurs:
- **Enichem Elastomeres France SA
  38800 Le Pont de Claix (FR)**
- **Enichem S.p.A.
  20097 S. Donato Milanese (Milano) (IT)**

(72) Inventeurs:
- **Sauterey, François
  F-38560 Champ sur Drac (FR)**

- **Thenoz, Françoise
  F-69300 Caluire (FR)**
- **Guyot, Alain
  F-69006 Lyon (FR)**
- **Lima, Romano
  I-48010 Godo (Ravenna) (IT)**
- **Maestri, Piero
  I-47034 Forlimpopoli (Forl ) (IT)**
- **Masi, Francesco
  I-26866 Sant'Angelo Lodigiano (Lodi) (IT)**

(74) Mandataire: **De Gregori, Antonella et al
Ing. Barzano & Zanardo Milano S.p.A.
Via Borgonuovo 10
20121 Milano (IT)**

(54) **Latex adhésif à base de polychloroprène fonctionnalisé carboxylique et à faible rétention d'eau**

(57)   On décrit un procédé de polymérisation du chloroprène ou d'un mélange de chloroprène et d'un monomère copolymérisable jusqu'à 20% en poids, en émulsion aqueuse en présence d'initiateurs radicalaires, à une température comprise entre 5°C et 70°C, caractérisé en ce que l'on conduit en présence d'un ou plusieurs tensioactifs copolymérisables en accord avec la formule décrite ci-après (I)

$$R^3\text{-}Z\text{-}CO\text{-}C(R^1)=C(R^2)\text{-}COOM \qquad (I)$$

ou:

$R^3$ est une chaîne hydrocarbonée, aliphatique ou aromatique, saturée ou insaturée, linéaire ou ramifiée, en $C_n$, avec n de 10 à 20 ;
$R^1$ et $R^2$, égaux ou différents, sont choisis parmi H, radical alkyle $C_1$-$C_3$ ;
Z est choisi parmi -O- et -NH-;
M est choisi parmi les métaux alcalins ou $NH_4$.

EP 1 258 500 A1

**Description**

La présente invention a pour objet un procédé de polymérisation du chloroprène ainsi que les polychloroprènes obtenus par le procédé et leur utilisation notamment dans les mélanges adhésifs.

Plus spécifiquement, l'invention a pour objet un procédé de polymérisation du chloroprène en émulsion aqueuse en présence de tensioactifs copolymérisables, de sorte que la totalité ou une grande partie du tensioactif copolymérisable se trouve fixée sur la chaîne polymérique.

Dans de nombreux domaines d'application, pour des raisons écologiques, d'hygiène et de sécurité, il est demandé de substituer les adhésifs solvantés par des adhésifs aqueux.

Parmi ses différentes utilisations, le caoutchouc de chloroprène est commercialisé pour réaliser des adhésifs solvantés. De nombreux brevets décrivent par conséquent le moyen d'obtenir des latex de polychloroprène copolymérisé ou non sous forme d'une émulsion ou d'une suspension aqueuse pour répondre à un tel besoin.

Les latex adhésifs à base de polychloroprène (CR) doivent présenter deux grandes caractéristiques que sont une bonne adhésivité sur de nombreux supports et un développement rapide des forces de cohésion du film, obtenu par une vitesse de cristallisation rapide du polymère.

Les performances d'adhésion mesurées à partir des latex adhésifs CR et ce notamment sur des supports non poreux sont plus faibles que celles obtenues avec les colles CR solvantées.

La formulation classique d'une polymérisation en émulsion fait intervenir, entre autres, un ou plusieurs composés amphiphiles appelés "tensioactifs", qui permettent à la fois de stabiliser les particules de polymère et de contrôler leur taille. Ces molécules de tensioactifs se répartissent entre la surface des particules de polymère et le milieu dispersant selon un équilibre complexe d'adsorption/désorption et peuvent se désorber sous certaines contraintes. Dans le cas d'un polymère filmogène tel que le CR, les conséquences de ce phénomène de désorption peuvent être néfastes. En effet, certains auteurs (Guyot A. et Tauer K., Advances in Polymer Science, 111, 43-45, 1994) ont avancé que le tensioactif ainsi désorbé était susceptible de migrer vers la surface du film, entraînant ainsi la formation de domaines hydrophiles. Ces zones de fragilité sont susceptibles d'altérer les propriétés du film, notamment sa résistance à l'humidité, caractéristique importante dans le domaine de la chaussure, et donc sa résistance à long terme.

Industriellement, la polymérisation du chloroprène utilise en tant que stabilisants des sels de colophane. Simplement adsorbés en surface des particules de polymère, les sels de colophane ont tendance, lors de la filmification, à se regrouper sous forme de domaines, créant ainsi des zones à caractère hydrophile. Il devient alors difficile d'éliminer l'eau en un temps court, ce qui réduit considérablement l'intérêt de ce type d'adhésifs, par comparaison avec d'autres latex adhésifs tels que les latex à base de polyuréthanes.

Un des moyens pour contrer ces inconvénients est d'incorporer un tensioactif copolymérisable avec le CP, qui se trouvera lié aux particules de polymère par une liaison chimique covalente. Il ne pourra donc, ni désorber de la surface des particules de polymère, ni former des zones hydrophiles lors de la filmification du latex. Cela permet de faciliter des chemins à l'eau vers la surface du film d'adhésif, réduisant ainsi le temps de séchage.

Cette alternative présente par ailleurs l'avantage de permettre, lors de la déstabilisation du latex en vue de son utilisation en tant que caoutchouc sec, un recyclage facilité de l'eau de lavage et une pollution aqueuse réduite.

L'objet de cette présente invention consiste à polymériser en émulsion le chloroprène, en présence ou non d'autres comonomères, en présence d'un tensioactif copolymérisable associé ou non à d'autres tensioactifs connus, de sorte à ce que la totalité ou une grande partie du tensioactif copolymérisable se trouve fixée par des liaisons covalentes sur la chaîne polymérique.

Le tensioactif copolymérisable est, à lui seul, à la fois générateur de micelles du fait de ses propriétés tensioactives et comonomère, ceci dans un grand domaine de pH et de température.

Les tensioactifs copolymérisables sont également appelés tensioactifs réactifs ou surfmères (contraction de "surfactant monomer"), car ils possèdent une fonction capable de prendre part à l'étape de propagation au même titre que le monomère principal.

Il est difficile de trouver, pour un monomère défini, un tensioactif capable de jouer simultanément les rôles de générateur de micelles (tensioactif vrai) et de comonomère.

Il est même surprenant de trouver un tensioactif copolymérisable générateur de micelles, qui puisse à lui seul assurer la polymérisation, sans l'inhiber, et donner naissance à un latex stable.

Les tensioactifs copolymérisables classiques et connus à ce jour, tels que les acides carboxyliques réactifs, le styrène sulfonate de sodium et autres produits, ne jouent en effet leur rôle de tensioactifs qu'une fois copolymérisés.

Parmi les tensioactifs réactifs décrits dans la littérature, on trouve entre autres des tensioactifs contenant des fonctions réactives de type acrylique ou méthacrylique, mais ces derniers ne permettent pas, à eux seuls, de former des latex stables (Schoonbrood H. A.S et al., Journal of Applied Polymer Science, 66, 1803 - 1820, 1997). Cela peut s'expliquer soit par leur réactivité élevée, conduisant à un taux d'enterrement important, soit par leur affinité pour la phase aqueuse et la formation de polyélectrolytes. Quelle qu'en soit la véritable raison, l'emploi de tels tensioactifs ne permet pas la préparation de latex stables, les particules de polymère se trouvant alors privées d'une fraction importante des charges carboxyliques stabilisantes apportées par le tensioactif.

De plus, il est difficile de trouver un tensioactif copolymérisable avec le CP, étant donné la réactivité élevée du chloroprène et sa tendance marquée à l'homopolymérisation.

L'utilisation d'un tensioactif sulfoné maléique, dérivé de la colophane sulfonée ou d'un acide gras sulfoné et synthétisé selon un protocole complexe en trois étapes, est décrite dans le brevet de Westvaco US 5 306 793, sans exemple d'application pour le chloroprène. Ce tensioactif copolymérisable ne peut être utilisé seul et requiert l'emploi parallèle d'un ou plusieurs tensioactifs usuels. Par ailleurs, la présence de groupements sulfonates gêne la déstabilisation du latex par le froid, ce qui compromet l'utilisation du polymère sous forme de caoutchouc sec.

Dans son brevet US 4 446 282, Goodyear (US) décrit l'emploi d'hémiesters et d'hémiamides de certains acides dicarboxyliques, tels que le 2-éthyl,1-hexyl maleic acid ester (EHMAE), mais à pH basique et uniquement en tant que comonomères, associés à un ou plusieurs tensioactifs vrais, dans le seul but de préparer des caoutchoucs secs porteurs de fonctions carboxyliques. Goodyear ne décrit pas la préparation de latex en l'état et ne présente aucun exemple de polymérisation du chloroprène.

Dans son brevet EP 0495365, Bayer décrit un procédé semi-continu permettant une répartition homogène des fonctions carboxyliques en surface des particules de polymère, via la copolymérisation d'un comomère acide, non tensioactif. Par comparaison avec un procédé batch, ce procédé souffre toutefois d'une mise en oeuvre complexe.

La demanderesse revendique un procédé de polymérisation du chloroprène ou d'un mélange de chloroprène et d'un monomère copolymérisable jusqu'à 20% en poids, en émulsion aqueuse en présence d'initiateurs radicalaires, à une température comprise entre 5°C et 70°C, caractérisé en ce que l'on conduit en présence d'un ou plusieurs tensioactifs copolymérisables en accord avec la formule décrite ci-après (I)

$$R^3\text{-}Z\text{-}CO\text{-}C(R^1)=C(R^2)\text{-}COOM \tag{I}$$

ou:

R$^3$ est une chaîne hydrocarbonée, aliphatique ou aromatique, saturée ou insaturée, linéaire ou ramifiée, en $C_n$, avec n de 10 à 20;
R$^1$ et R$^2$, égaux ou différents, sont choisis parmi H, radical alkyle $C_1$-$C_3$;
Z est choisi parmi -O- et -NH-;
M est choisi parmi les métaux alcalins ou $NH_4$.

Ce produit de formule (I) peut être préparé par une réaction chimique simple telle que la réaction entre un alcool gras et l'anhydride maléique ou entre une amine grasse et l'anhydride maléique.

La demanderesse revendique la réactivité modérée (Schoonbrood H. A.S et al., Journal of Applied Polymer Science, 66, 1803 - 1820, 1997) et l'absence de réactions d'homopolymérisation (Tauer K. et al., Makromol. Chem., Macromol. Symp., 31, 107 - 121, 1990) des tensioactifs réactifs décrits précédemment. Cette caractéristique leur permet de réagir avec le chloroprène, seul ou associé à d'autres comonomères, préférentiellement en fin de réaction, pour une conversion globale des monomères principaux élevée. Cela limite la perte des fonctions carboxyliques stabilisantes, que cela soit par enterrement ou réaction d'homopolymérisation, et permet ainsi de stabiliser convenablement les latex, sans qu'il soit nécessaire de recourir à un co-tensioactif.

La demanderesse revendique l'homo ou la copolymérisation du chloroprène en présence des seuls tensioactifs "réactifs" définis précédemment, dans la plage de température de polymérisation de 5 à 70°C, dans un domaine de pH allant de 5 et 13, de préférence entre 6 et 8, c'est-à-dire permettant la polymérisation de comonomères acides ou facilement hydrolysables tels que les acides (méth)acryliques et les (méth)acrylates d'alkyle.

La quantité des tensioactifs "réactifs" selon la formule (I) est de 2 millimoles à 50 millimoles, de préférence de 5 millimoles à 20 millimoles, pour 100 grammes du chloroprène ou du mélange du chloroprène et des monomères copolymérisables.

Le procédé de polymérisation selon l'invention est réalisé de manière connue en émulsion aqueuse en présence de générateurs de radicaux libres, comme l'eau oxygénée, les peroxydes organiques, peroxyde de cumyle, peroxyde de dibenzoyle, les ferricyanures de métaux alcalins ou d'ammonium, et de préférence les persulfates de métaux alcalins ou d'ammonium.

Le chloroprène peut être remplacé jusqu'à 20% de son poids par un autre monomère copolymérisable. Parmi les monomères copolymérisables avec le chloroprène on peut citer les composés vinylaromatiques, comme le styrène, les vinyltoluènes et vinylnaphtalènes, les acides acryliques, méthacryliques ainsi que leurs dérivés esters et nitriles comme l'acrylate d'éthyle, le butadiène, l'isoprène, le 2,3-dichloro-1,3-butadiène et le 2,3-diméthyl-1,3-butadiène, les éthers et cétones vinyliques comme l'éther méthyl vinylique, l'acétate de vinyle et le méthylvinylcétone.

La concentration du ou des monomères dans l'émulsion est généralement comprise entre 30 et 60% en poids par rapport au poids total de l'émulsion.

Le taux de conversion final peut varier de 50% à 100%, et de préférence de 70% à 95%.

La polymérisation peut être stoppée à tout moment par addition d'un agent inhibiteur de polymérisation conventionnel. Le monomère résiduel est éliminé par distillation flash.

Les fonctions carboxyliques présentes en surface des particules de polymère du latex sont comprises entre 3 meq/100 grammes et 30 meq/100 grammes, de préférence entre 5 meq/100grammes et 15 meq/100 grammes de polymère.

L'emploi d'un tensioactif réactif comme revendiqué permet, par rapport à l'emploi de tensioactifs conventionnels généralement utilisés pour la polymérisation en émulsion du chloroprène, de réduire d'un facteur 4 la reprise en eau des films de latex (Exemples 1C et 2C).

Il est probable que ces propriétés résultent d'un taux d'incorporation élevé du tensioactif réactif dans les macromolécules de polymère (Exemple 1D).

D'autre part, l'emploi d'un tensioactif réactif comme revendiqué permet de fonctionnaliser, préférentiellement en surfacer les particules de polymère, sans avoir recours à un procédé d'addition semi-continue des monomères et contrairement à l'emploi d'un comonomère acrylique en procédé batch (Exemples 1E et 2E).

Enfin, l'emploi d'un tensioactif réactif comme revendiqué permet de limiter l'influence négative de la copolymérisation sur les propriétés cristallines du matériau final (Exemples 1F à 4F).

**Exemple 1A**

Un latex homopolymère de chloroprène est obtenu par polymérisation, à 50°C et sous atmosphère inerte d'azote, de 100 parties massiques de chloroprène, 0,23 partie massique de n-dodécylmercaptan, 0,0097 mole de tensioactif réactif hémiester HEC12 ($R_1$=$R_2$=H, Z=O, M=Na, n = 12) pour 100 g de monomère, un équivalent molaire de soude et 90 parties massiques d'eau adoucie désaérée. La polymérisation est initiée par envoi continu d'un système redox constitué de persulfate de sodium à 1% et de dithionite de sodium à 1%. La polymérisation est arrêtée vers 75% de conversion par addition de 0,05 partie massique de phénothiazine.

**Exemples 2A à 6A**

Un latex homopolymère de chloroprène est préparé comme décrit dans l'exemple 1A, à l'exception que l'on fait varier la nature de l'émulsifiant réactif utilisé, en maintenant le nombre de mole de ce dernier identique sur l'ensemble des essais, soit égal à 0,0097 mole pour 100 g de chloroprène engagés.

L'émulsifiant réactif de l'exemple 2A est HEC16 ($R_1$=$R_2$=H, Z=O, M=Na, n = 16).

L'émulsifiant réactif de l'exemple 3A est HA12 ($R_1$=$R_2$=H, Z=NH, M=Na, n = 12).

L'émulsifiant réactif de l'exemple 4A est HA16 ($R_1$=$R_2$=H, Z=NH, M=Na, n = 16).

L'émulsifiant réactif de l'exemple 5A est HEC12-C14 linéaire ($R_1$=$R_2$=H, Z=O, M=Na, $R_3$ est un radical alkyle linéaire Rn ou n = 12-14).

L'émulsifiant réactif de l'exemple 6A est HEC16-C18 insaturé ($R_1$=$R_2$=H, Z=O, M=Na, $R_3$ est un radical alkyle insaturé $R_n$ ou n = 16-18).

**Exemple comparatif 7A**

Un latex homopolymère de chloroprène est préparé comme décrit dans l'exemple 1A, à l'exception que l'émulsifiant réactif HEC12 est remplacé par de la colophane dismutée Grésinox 511, utilisée dans les mêmes quantités molaires que les émulsifiants réactifs des exemples 1A à 6A.

| Exemples | 1A | 2A | 3A | 4A | 5A | 6A | Comparatif 7A |
|---|---|---|---|---|---|---|---|
| HEC12 | 9,7 (a) | – | – | – | – | – | – |
| HEC16 [b] | – | 9,7 (a) | – | – | – | – | – |
| HA12 | – | – | 9,7 (a) | – | – | – | – |
| HA16 | – | – | – | 9,7 (a) | – | – | – |
| HEC12-C14 linéaire | – | – | – | – | 9,7 (a) | – | – |
| HEC16-C18 insaturé | – | – | – | – | – | 9,7 (a) | – |
| colophane dismutée [c] | – | – | – | – | – | – | 9,7 (a) |
| Taux de solide (%) | 37,5 | 44,6 | 40,6 | 35,4 | 35,6 | 37,2 | 38,7 |

[a] Quantité exprimée en $10^{-3}$ mole de tensioactif pour 100 g de chloroprène chargés

[b] Sinnoester HMP commercialisé par la société Sidobre-Sinnova, de type hémiester, porteur d'une chaîne hydrocarbonée linéaire saturée à 16 carbones

[c] Grésinox 511 commercialisée par la société DRT

Les exemples 1A à 6A montrent que l'emploi des seuls tensioactifs réactifs répondant à la formule (I) permet à la fois de générer des micelles et de conduire la polymérisation dans de bonnes conditions. Les latex obtenus sont stables.

### Exemples 1B à 7B

Des latex homopolymères de chloroprène sont préparés comme décrit dans l'exemple 1A, à l'exception que l'on utilise exclusivement l'émulsifiant réactif commercial Sinnoester HMP, en faisant varier à la fois la température de polymérisation (de 50°C à 10°C) et le pH de polymérisation (de 6,2 à 12), à travers la nature du tampon de pH.

### Exemples comparatifs 8B à 10B

Des latex homopolymères de chloroprène sont préparés comme décrit dans l'exemple 7A, à l'exception que l'on fait varier la nature du tampon pH et donc le pH de polymérisation.

|  | | | | | | | | Comparatifs | | |
| Exemples | 1B | 2B | 3B | 4B | 5B | 6B | 7B | 8B | 9B | 10B |
|---|---|---|---|---|---|---|---|---|---|---|
| HEC16 [a] | 9,7 | 9,7 | 9,7 | 9,7 | 9,7 | 9,7 | 9,7 | – | – | – |
| colophane dismutée [b] | – | – | – | – | – | – | – | 9,7 | 9,7 | 9,7 |
| T°C | 50 | 30 | 10 | 50 | 30 | 10 | 50 | 50 | 50 | 50 |
| pH initial | 12 | 12 | 12 | 8 | 8 | 8 | 6,2 | 12 | 8 | 6 |
| Taux de solide (%) | 48 | 47,9 | 50,7 | 46,1 | 50,3 | 50,7 | 50,7 | 51,1 | – | – |
| Diamètre final des particules (nm) | 115 | 122 | 172 | 103 | 110 | 127 | 250 | 140 | – | – |
| Temps de réaction (h) | 8 | 5,75 | 6,2 | 6,75 | 4,25 | 4 | 5 | 12 | – | – |
| Faisabilité | polymérisations réalisables | | | | | | | | réaction impossible | |

[a] Sinnoester HMP commercialisé par la société Sidobre-Sinova, quantité exprimée en $10^{-3}$ mole de tensioactif pour 100 g de chloroprène chargés

[b] Grésinox 511 commercialisée par la société DRT, quantité exprimée en $10^{-3}$ mole de tensioactif pour 100 g de chloroprène chargés

Les exemples 1B à 7B mettent en évidence la possibilité de polymériser le chloroprène en présence d'un seul tensioactif réactif répondant à la formule (I), dans une plage de température comprise entre 10°C et 50°C, dans une plage de pH variant de 6,2 à 12. Les exemples comparatifs 8B à 10B montrent quant à eux que l'emploi de sels de colophane ne permet pas de polymériser le chloroprène à des pH faiblement basiques ou acides.

**Exemple 1C et exemple comparatif 2C**

Deux latex homopolymères de chloroprène sont préparés comme décrit dans l'exemple 1A, à l'exception que le taux de conversion du monomère est égal ou supérieur à 97%. Les latex sont filmifiés à 60°C pendant 10 jours. Des éprouvettes sont ensuite découpées dans les films, pesées à la balance de précision et immergées dans de l'eau déminéralisée, à température ambiante, pendant plusieurs jours. Le suivi de l'augmentation de la masse des éprouvettes au cours du temps donne accès à la reprise en eau des films, calculée comme suit:

Reprise en eau (t) = [masse (t) - masse initiale] / masse

initiale * 100

| Exemples | 1C | Comparatif 2C |
|---|---|---|
| HEC16 [a] | 9,7 | - |
| colophane dismutée [b] | - | 9,7 |
| Taux de solide final (%) | 50 | |
| pH final | 11,6 | 51 |
| Reprise en eau après 1 jour (%) | 1,9 | 7,4 |
| Reprise en eau après 2 jours (%) | 2,9 | 11 |
| Reprise en eau après 3 jours (%) | 3,7 | 13,7 |
| Reprise en eau après 4 jours (%) | 4,3 | 16 |
| Reprise en eau après 17 jours (%) | 10,1 | 40,8 |
| Reprise en eau après 29 jours (%) | 15 | 60,6 |

[a] Sinnoester HMP commercialisé par la société Sidobre-Sinova, quantité exprimée en $10^{-3}$ mole de tensioactif pour 100 g de chloroprène chargés

[b] Grésinox 511 commercialisée par la société DRT, quantité exprimée en $10^{-3}$ mole de tensioactif pour 100 g de chloroprène chargés

L'exemple 1C et l'exemple comparatif 2C montrent que l'emploi d'un tensioactif réactif répondant à la formule revendiquée (I) permet de réduire d'un facteur 4 la reprise en eau des films de latex.

**Exemple 1D**

Un latex homopolymère de chloroprène est préparé selon le mode opératoire décrit dans l'exemple 1A, à l'exception que le tampon pH utilisé est l'hydrogénocarbonate de sodium et le tensioactif réactif un hémiester en C16 commercial (Sinnoester HMP). La méthode utilisée pour la détermination de la répartition du tensioactif réactif entre la surface des particules et la phase aqueuse consiste à effectuer des dosages conductimétriques Cette technique permet de doser les fonctions carboxyliques présentes en surface des particules de polymère d'un latex ou bien en phase aqueuse. Le dosage consiste en un dosage en retour : un excès de soude est ajouté à l'échantillon à doser, de façon à ioniser l'ensemble des fonctions carboxyliques présentes, puis l'on effectue ensuite un dosage à l'acide chlorhydrique des fonctions acide fort puis acide faible. Ces dosages ont été réalisés après divers traitements ou lavages du latex.

| Exemple | 1D [a] |
|---|---|
| Dosage après lavages sur résines échangeuses d'ions [b] | **69%** du HEC16 en *surface* des particules de latex |
| Remplacement de sérum par ultrafiltration 10 fois [c] et dosage du <u>latex</u> | **76%** du HEC16 en *surface* des particules |
| Remplacement de sérum par ultrafiltration 10 fois [c] et dosage du <u>sérum</u> | **22%** du HEC16 en *phase aqueuse* |
| Centrifugation et dosage de la phase aqueuse [d] | **5%** du HEC16 en *phase aqueuse* |

[a] Quantité de HEC16 exprimée en pourcentage relatif à la quantité totale engagée initialement – Dosages conductimétriques effectués à la soude $10^{-2}$ N et à l'acide chlorhydrique $10^{-2}$ N

(b) Dilution du latex à 2% de taux de solide, traitements successifs par un mélange équimolaire de résines échangeuses d'ions anioniques et cationiques Dowex MR-3 (Aldrich), jusqu'à l'obtention de valeurs de conductivité constantes

(c) Dilution du latex à 2% de taux de solide et remplacement du sérum 10 fois par filtration tangentielle sur plaques de cellulose Millipore de seuil de coupure égal à 5 nm

(d) Centrifugation du latex brut 3h à 20 000 tours/min, puis 40 min à 5 000 tours/min sur un filtre Millipore de seuil de coupure égal à 100 nm : récupération de la phase aqueuse non précipitée puis dosage

L'exemple 1D met en évidence la présence, après lavages du latex selon 2 techniques différentes, de près de 70% de la quantité initiale de tensioactif réactif chargé en surface des particules. Parallèlement, le dosage de la phase aqueuse confirme ces résultats, avec moins de 25% du tensioactif réactif libre en phase aqueuse. Ces résultats viennent appuyer l'hypothèse d'un très faible enterrement du tensioactif réactif engagé.

**Exemple 1E**

Un latex homopolymère de chloroprène est obtenu par polymérisation en émulsion, à 12°C et sous atmosphère d'azote, de 100 parties massiques de chloroprène, 0,23 partie massique de n-dodécylmercaptan, 3 parties massiques d'émulsifiant réactif HEC16, 2,3 parties massiques d'hydrogénocarbonate de sodium, 2 parties massiques de tensioactif non ionique NP30 (nonylphénol porteur de 30 chaînons polyoxyéthylène, commercialisé par la société BASF), 0,4 partie massique de dithionite de sodium et 92,3 parties massiques d'eau adoucie désaérée. La polymérisation est amorcée par envoi continu, à vitesse constante, d'une solution de persulfate de sodium à 4% dans l'eau. La polymérisation est arrêtée à une conversion supérieure ou égale à 90% par addition de 0,05 partie massique de phénothiazine.

**Exemple comparatif 2E**

Un latex copolymère de chloroprène et d'acide méthacrylique est obtenu par polymérisation en émulsion, à 10°C et sous atmosphère d'azote, de 98 parties massiques de chloroprène, 2 parties massiques d'acide méthacrylique, 0,1 partie massique de n-dodécylmercaptan, 2,5 parties massiques d'Emulsogen EP (tensioactif sulfoné alkyl linéaire en C12 - C18, commercialisé par la société Hoechst), 1,5 partie massique de Triton X100 (octylphénoxypolyéthoxyéthanol, commercialisé par la société Union Carbide), 72 parties massiques d'eau adoucie désaérée et 0,14 partie massique de dithionite de sodium. La polymérisation est amorcée par envoi continu, à vitesse constante, d'une solution de persulfate de sodium à 2% dans l'eau. La polymérisation est arrêtée à une conversion supérieure ou égale à 90% par addition de 0,05 partie massique de phénothiazine.

Les latex dont la synthèse est présentée dans les exemples 1E et 2E sont dilués à 2% de taux de solide puis lavés 4 fois sur un mélange équimolaire de résines échangeuses d'ions anioniques et cationiques Dowex MR-3, jusqu'à l'obtention de valeurs de conductivité stables. Les charges carboxyliques de surface sont ensuite dosés par conductimétrie, selon la méthode décrite en exemple 1D. Cette analyse donne accès au pourcentage de charges carboxyliques apportées soit par le tensioactif (Exemple 1E), soit par le comonomère méthacrylique (Exemple 2E) et que l'on retrouve en surface des particules de polymère après une série de lavages sur résines.

| Exemples | 1E | Comparatif 2E |
|---|---|---|
| % de fonctions carboxyliques en surface des particules de polymère après 4 lavages sur résines [a] | **55%** du HEC16 en *surface* des particules de latex | **25%** de l'acide méthacrylique en *surface* des particules de latex |

[a] Quantité de charges carboxyliques exprimée en pourcentage relatif à la quantité totale engagée initialement - Dosages conductimétriques effectués à la soude $10^{-2}$ N et à l'acide chlorhydrique $10^{-2}$ N

L'exemple 1E et l'exemple comparatif 2E montrent que l'emploi d'un tensioactif réactif répondant à la formule (I) permet d'améliorer la fonctionnalisation de surface par les charges carboxyliques, contrairement à l'utilisation d'acide méthacrylique en batch, pour lequel les résultats obtenus laissent soupçonner un taux d'enterrement élevé.

**Exemple 1F**

Un latex homopolymère de chloroprène est obtenu par polymérisation en émulsion, à 10°C et sous atmosphère d'azote, de 100 parties massiques de chloroprène, 0,1 partie massique de n-dodécylmercaptan, 3,5 parties massiques de colophane dismutée Grésinox 511 (commercialisé par la société DRT), 0,88 partie massique de potasse, 1,5 partie massique de Triton X100 (octylphénoxypolyéthoxyéthanol, commercialisé par la société Union Carbide), 72 parties massiques d'eau adoucie désaérée et 0,14 partie massique de dithionite de sodium. La polymérisation est amorcée par envoi continu, à vitesse constante, d'une solution de persulfate de sodium à 2% dans l'eau. La polymérisation est arrêtée à une conversion supérieure ou égale à 90% par addition de 0,05 partie massique de phénothiazine.

**Exemples 2F et 3F**

Deux latex homopolymères de chloroprène sont préparés comme décrit dans l'exemple 1E, à l'exception que le tensioactif réactif HEC16 est, dans l'un des cas, remplacé par son homologue non réactif, c'est-à-dire exempt de double liaison et préparé dans les mêmes conditions mais en présence d'anhydride succinique et non pas maléique (HES16, Exemple 2F - HEC16, Exemple 3F).

**Exemple 4F**

Un latex homopolymère de chloroprène est préparé comme décrit dans l'exemple comparatif 2E.
Le temps de demi-cristallisation est déterminé sur l'ensemble des latex dont la synthèse est présentée dans les Exemples 1F à 4F, au moyen d'un test de dureté Shore. Les latex sont pour cela précipités dans l'éthanol, rassemblés en un film épais et l'évolution de leur dureté au cours du temps suivie par test Shore. Le temps de demi-cristallisation correspond à l'obtention de 50% de l'écart de dureté observé entre le temps zéro et le temps final.

| Exemples | 1F | 2F | 3F | 4F |
|---|---|---|---|---|
| agent carboxylique employé | colophane dismutée | HES16 | HEC16 | acide méthacrylique |
| temps de demi-cristallisation (heures) | 5 | 4,7 | 7,3 | 13,9 |

Il est connu que la copolymérisation du chloroprène conduit à introduire dans les chaînes des défauts qui ont pour conséquence de réduire les propriétés cristallines du polymère.

Les exemples 1F, 2F et 4F montrent l'influence néfaste de la copolymérisation en batch de l'acide méthacrylique sur la vitesse de cristallisation du matériau. L'exemple 3F met quant à lui en évidence une influence largement moins marquée du HEC16, que l'on peut attribuer à une incorporation tardive au sein des chaînes polymère. Cet exemple montre par conséquent qu'il est possible de fonctionnaliser le polychloroprène par des fonctions carboxyliques, sans toutefois altérer dans une large mesure ses propriétés cristallines et donc ses propriétés adhésives, ce qui n'est pas le cas d'une copolymérisation classique en batch avec l'acide méthacrylique.

**Revendications**

1.   Procédé de polymérisation du chloroprène ou d'un mélange de chloroprène et de , jusqu'à 20% en poids , d'un monomère copolymérisable en émulsion aqueuse en présence d'initiateurs radicalaires, à une température comprise entre 5°C et 70°C, **caractérisé en ce que** l'on conduit en présence d'un ou plusieurs tensioactifs copolymérisables en accord avec la formule décrite ci-après (I)

$$R^3\text{-Z-CO-C}(R^1)\text{=C}(R^2)\text{-COOM} \tag{I}$$

ou:

R$^3$ est une chaîne hydrocarbonée, aliphatique ou aromatique, saturée ou insaturée, linéaire ou ramifiée, en C$_n$, avec n de 10 à 20;
R$^1$ et R$^2$, égaux ou différents, sont choisis parmi H, radical alkyle C$_1$-C$_3$;
Z est choisi parmi -O- et -NH-;
M est choisi parmi les métaux alcalins ou NH$_4$

2.   Procédé selon la revendication 1, **caractérisé en ce que** R$^3$ est choisi parmi les radicaux alkyles de C$_{12}$ à C$_{18}$ .

3.   Procédé selon la revendication 1, **caractérisé en ce que** R$^1$=R$^2$=H.

4.   Procédé selon la revendication 1, **caracterisé en ce que** M est choisi parmi Na et K.

5.   Procédé selon la revendication 1, **caractérisé en ce que** R$^3$ est un radical alkyle linéaire saturé C$_{16}$, R$^1$=R$^2$=H, Z=O, M =Na.

6.   Procédé selon la revendication 1, **caractérisé en ce que** l'on conduit la réaction à un pH de 5 à 13.

7.   Procédé selon la revendication 6, **caractérisé en ce que** l'on conduit la réaction à un pH de 6 à 8.

8.   Procédé selon la revendication 1, **caractérisé en ce que** le tensioactif copolymérisable de formule (I) est présent en quantité de 2 millimoles à 50 millimoles pour 100 grammes de chloroprène ou du mélange de chloroprène et des monomères copolymérisables.

9. Procédé selon la revendication 7, **caractérisé en ce que** le tensioactif copolymérisable de formule (I) est présent en quantité de 5 millimoles à 20 millimoles pour 100 grammes de chloroprène ou du mélange de chloroprène et des monomères copolymérisables.

10. Latex de homopolymères de chloroprène préparé selon le procédé de la revendication 1, **caractérisé en ce que** les fonctions carboxyliques présentes en surface des particules de polymère du latex sont comprises entre 3 meq/100 grammes et 30 meq/100 grammes de polymère.

11. Latex de homopolymères de chloroprène selon la revendication 10, **caractérisé en ce que** les fonctions carboxyliques présentes en surface sont comprises entre 5 meq/100grammes et 15 meq/100 grammes de polymère.

**Office européen des brevets**

# RAPPORT DE RECHERCHE EUROPEENNE

Numéro de la demande

EP 01 20 2703

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | DE 36 43 792 A (BAYER AG) 23 juin 1988 (1988-06-23) * abrégé; revendications * * page 2, ligne 20 – ligne 35 * * page 3, ligne 51 – ligne 62 * | 1-11 | C08F 36/18 C08F 2/26 |
| A | DE 25 35 169 A (TOYO SODA MFG CO LTD) 19 février 1976 (1976-02-19) * revendications * | | |
| D,A | US 5 306 793 A (PARKER III JULIAN E ET AL) 26 avril 1994 (1994-04-26) * abrégé; revendications * * colonne 4, ligne 40 * | | |

**DOMAINES TECHNIQUES RECHERCHES (Int.Cl.7)**

C08F

Le présent rapport a été établi pour toutes les revendications

| Lieu de la recherche | Date d'achèvement de la recherche | Examinateur |
|---|---|---|
| LA HAYE | 28 janvier 2002 | Mettler, R-M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
&  : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 01 20 2703

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

28-01-2002

| Document brevet cité au rapport de recherche | | Date de publication | Membre(s) de la famille de brevet(s) | | Date de publication |
|---|---|---|---|---|---|
| DE 3643792 | A | 23-06-1988 | DE | 3643792 A1 | 23-06-1988 |
| | | | DE | 3763079 D1 | 12-07-1990 |
| | | | EP | 0275451 A1 | 27-07-1988 |
| | | | JP | 63165351 A | 08-07-1988 |
| | | | US | 4959419 A | 25-09-1990 |
| DE 2535169 | A | 19-02-1976 | JP | 925516 C | 22-09-1978 |
| | | | JP | 51018784 A | 14-02-1976 |
| | | | JP | 53004030 B | 13-02-1978 |
| | | | DE | 2535169 A1 | 19-02-1976 |
| | | | FR | 2281385 A1 | 05-03-1976 |
| | | | GB | 1511533 A | 24-05-1978 |
| US 5306793 | A | 26-04-1994 | AUCUN | | |

EPO FORM P0460

Pour tout renseignement concernant cette annexe : voir Journal Officiel de l'Office européen des brevets, No.12/82